# EUROPEAN PATENT SPECIFICATION

(11) **EP 2 896 919 B1**
(45) Date of publication and mention of the grant of the patent: **21.06.2017**
(21) Application number: 13004847.3
(22) Date of filing: 09.10.2013
(51) Int. Cl.: F28D 7/00, F28D 7/02, F28D 21/00, F24H 8/00

(54) **Flue gas - liquid heat exchanger for industrial and residential co-fired boilers**
Abgas-Flüssigkeits-Wärmetauscher für industrielle oder häusliche Co-Verbrennungs Kessel
Échangeur de chaleur de gaz d'échappement - liquide pour chaudière à co-combustion industrielle ou domestique

(43) Date of publication of application: 22.07.2015
(73) Proprietor: Bökönyi, József, 4030 Debrecen (HU); Kárai, Peter, 2896 Szomod (HU)
(72) Inventor: Bökönyi, József, 4030 Debrecen (HU); Kárai, Peter, 2896 Szomod (HU)

(56) References cited:
- EP-A1- 0 023 317
- WO-A1-90/11472
- DE-A1- 2 750 889
- DE-U1- 8 024 502
- FR-A- 1 419 836
- GB-A- 1 495 696
- GB-A- 2 061 476
- US-A1- 2004 206 485

## Description

The invention relates to a flue gas-liquid heat exchanger for industrial and residential co-fired boilers, which flue gas-liquid heat exchanger is placed between the co-fired boiler and the chimney, and forms a flue pipe comprised of a tightly coiled spiral tube. The solution according to the invention increases the performance of co-fired boilers by recovering heat from the high-temperature combustion product and flue gas generated during the firing of the boiler in such a way that the temperature of the emitted high-temperature combustion product and flue gas generated during the firing of the boiler is reduced, and the temperature of the heating liquid is further increased.

The temperature of the combustion product, flue gas generated during the combustion of fuel burned for heating purposes in co-fired boilers is between about 300-1000 °C, depending on the intensity of combustion. The currently commercially available chimney systems have very good heat insulation, therefore due to the high temperature the combustion product, soot deposited in the chimney easily ignites and burns, and thus can cause chimney fires.

The high-temperature combustion product and flue gas leaving through the chimney on the one hand is a major heat loss from the point of view of the system to be heated, and on the other hand the emitted high-temperature combustion product, flue gas has a strong environmental impact.

In the prior art several solutions are known for using the heat of the emitted high-temperature combustion product, flue gas for the benefit of the system to be heated, or in some other way. This problem is often solved by using heat exchangers placed either in the combustion chamber of the boiler, or in the pipe used for discharging the combustion product.
Such a solution is disclosed in utility model No. U9500140, a spiral heat exchanger for co-fired boilers. The essence of the spiral heat exchanger is that a spiral tube bundle made of steel or copper tubes is arranged in the flue gas space between column pipes and a collecting drum, between upper and lower water-collecting pipes - connected by the column pipes. The tube bundle consists of parallel tubes, and the heat exchanger constructed this way is placed in the combustion chamber of a boiler.

Utility model No. U9300182 relates to an arrangement for recovering heat from flue gas, which arrangement comprises a heat exchanger containing liquid, placed in the pipe used for discharging the flue gas, which heat exchanger is connected to one or more heat transferring units located outside the flue pipe. The essence of the solution is that the arrangement comprises a straight heat exchanger tube in a vertical position, located inside a vertical flue pipe in such a way that it is surrounded by the flue gas, furthermore a heat transferring unit located outside the flue pipe, mechanically fixed to the flue pipe, is connected to the arrangement, in which heat transferring unit a meander shaped heat exchanger tube is placed between preferably perforated side plates. At the top of the heat transferring unit a surge tank is connected to the heat exchanger tube.

US patent No. 20040206485 relates to an external flue gas heat exchanger for boilers. The heat exchanger is a spiral tube, and is mounted on a section of the flue pipe between the boiler and the chimney.

Patent No. GB 1495696 discloses a boiler where the emitted flue gases are used for heating water by means of a heat exchanger. The flue pipe is equipped with a draft control fan, the speed of which is thermostatically controlled based on the chimney outlet temperature.

These solutions increase the performance of boilers, but are not efficient enough from the point of view of recovering heat from the emitted combustion product and flue gas.

The aim of the invention is to achieve a high degree of heat recovery from the high-temperature combustion product, flue gas emitted from a co-fired boiler, to reduce the heat loss to a minimum from the point of view of the system to be heated, and to cool the temperature of the emitted combustion product, flue gas below the danger zone.

This is achieved by means of a flue gas-liquid heat exchanger which is placed between the co-fired boiler and the chimney and forms a flue pipe comprised of one or more tightly coiled spiral tubes. The inner space of the flue pipe is used for discharging the combustion product, flue gas. The high-temperature combustion product, flue gas emitted from the co-fired boiler transfers its heat to a liquid flowing in the spiral tube. Thus the temperature of the heating liquid leaving the co-fired boiler, led into the flue pipe and passing along the flue pipe is further increased, while the temperature of the combustion product and flue gas flowing in the inner space of the flue pipe is reduced. The essence of the solution is that the flue pipe is formed by the heat exchanger itself.

In addition to increasing the temperature of the heating liquid leaving the co-fired boiler, our solution also allows further heat recovery from the high-temperature combustion product, flue gas. In that case the flue pipe is comprised of at least two spiral tubes. Then the heating liquid of the co-fired boiler flows in one of the spiral tubes, and a liquid to be heated independent of the heating liquid of the co-fired boiler, e.g. cold water flows in the other spiral tube, which is also heated while it passes along the spiral tube.

Thus the invention relates to a flue gas-liquid heat exchanger for industrial and residential co-fired boilers, the lower end of which is connected to the flue pipe stub of the co-fired boiler, and its upper end to the chimney in a releasable manner. The flue gas-liquid heat exchanger has a temperature measuring instrument connected to a control unit, a draft control fan, and a heating liquid line equipped with a circulating pump. The flue gas-liquid heat exchanger forms a flue pipe comprised of one or more tightly coiled spiral tubes, and is equipped with an insulating layer provided with a cover. The liquid to be heated is led into the spiral tubes of the flue pipe, and the inner space of the flue pipe is the part used for discharging the flue gas emitted from the co-fired boiler. At least one spiral tube has an inlet opening and an outlet opening, which inlet opening connects to the heating liquid line leaving the boiler, and the outlet opening connects to the heating liquid line.

According to a preferred embodiment the flue pipe is comprised of one spiral tube, into which the heating liquid of the co-fired boiler is led. The heating liquid passing along the flue pipe is led into the heating liquid line connected to the upper part of the flue pipe, through which it flows to a distributing-collecting manifold.

According to another preferred embodiment the flue pipe is comprised of two spiral tubes, the coils of which fit together. In this solution one of the spiral tubes is made in the same way as in the case of the flue pipe comprised of one spiral tube. A liquid to be heated independent of the heating liquid of the co-fired boiler is led into the second spiral tube, and led out at the other end of the flue pipe. In flue pipes comprised of two spiral tubes the liquids may flow in the same direction, or in opposite directions.

According to yet another preferred embodiment there are horizontal expansion loops in the inner part of the flue pipe, branching off from the coils of the spiral tube. Then the heating liquid to be heated flowing through the expansion loops is heated directly by the combustion product and flue gas flowing in the inner space of the flue pipe. This cross-flow solution can be applied to both single spiral tube and double spiral tube flue pipes.

The flue gas-liquid heat exchanger according to the invention is described in detail below with reference to the following figures, where
- Figure 1: shows a side sectional view of the single spiral tube embodiment of the invention,
- Figure 2: shows a front sectional view of the single spiral tube embodiment of the invention,
- Figure 3: shows a side sectional view of the connection of the single spiral tube embodiment of the invention to the chimney and the boiler,
- Figure 4: shows a cross-sectional view of the single spiral tube embodiment of the invention,
- Figure 5: shows a side sectional view of the double spiral tube embodiment of the invention,
- Figure 6: shows a longitudinal sectional view of the embodiment of the invention comprising expansion loops,
- Figure 7: shows a cross-sectional view of the embodiment of the invention comprising expansion loops.

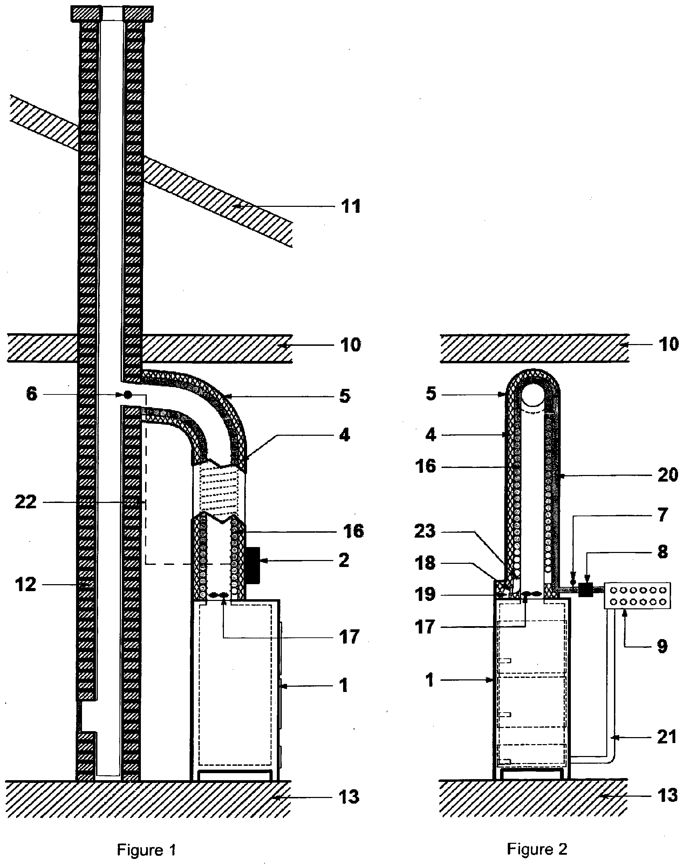

Figure 1 shows the connection of the flue pipe 16 on the one hand to the co-fired boiler 1, and on the other hand to the chimney 12.
The flue pipe 16 is a tightly coiled spiral tube. The flue pipe 16 is surrounded by a heat insulating layer 4 provided with a cover 5.
The flue pipe 16 connected to the co-fired boiler 1 standing on the floor structure 13 extends up to the ceiling structure 10 of the house, where the flue pipe 16 joins the chimney 12 extending above the roof structure 11.
A temperature measuring instrument 6 is installed at the connection of the flue pipe 16 and the chimney 12. A control unit 2 is fixed on the cover 5 of the flue pipe 16 close to the co-fired boiler 1. The temperature measuring instrument 6 and the control unit 2 are connected by an electric wire 22. A draft control fan 17 is installed in the lower part of the flue pipe 16.

Figure 2 shows that the flue pipe 16 connected to the co-fired boiler 1 standing on the floor structure 13 extends up to the ceiling structure 10. The flue pipe 16 has an inlet opening 23. The inlet opening 23 connects to the heating liquid line leaving the boiler 19 of the co-fired boiler 1 by means of a coupling 18. The heating liquid line 20 runs directly along the flue pipe 16 and is connected to a distributing-collecting manifold 9. On the heating liquid line 20, close to the distributing-collecting manifold 9 there is a circulating pump 8, and before the circulating pump 8 there is a thermometer 7. The return heating liquid line 21 branching off from the distributing-collecting manifold 9 is connected to the co-fired boiler 1. A draft control fan 17 is installed in the lower part of the flue pipe 16.

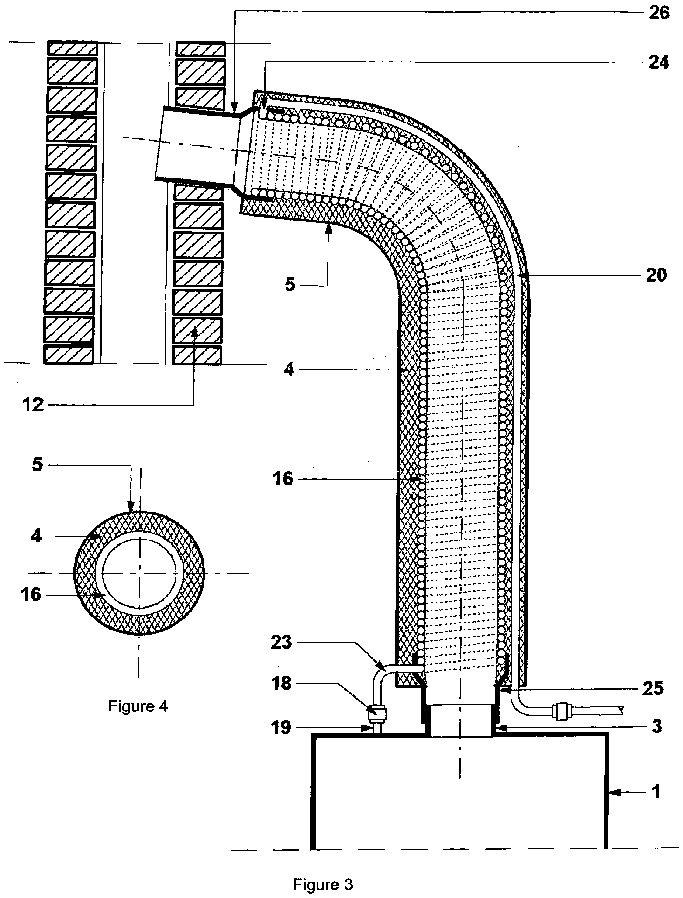

Figure 3 shows that the lower part of the flue pipe 16 is connected to the flue pipe stub 3 of the co-fired boiler 1 by means of a boiler connecting piece 25.
The upper part of flue pipe 16 is connected to the chimney 12 by means of a chimney connecting piece 26.

The upper part of the flue pipe 16 has an outlet opening 24, which outlet opening 24 connects to the heating liquid line 20. The heating liquid line 20 runs directly along the flue pipe 16.

Figure 4 shows a cross-section of the flue pipe 16 surrounded by a heat insulating layer 4 and a cover 5.

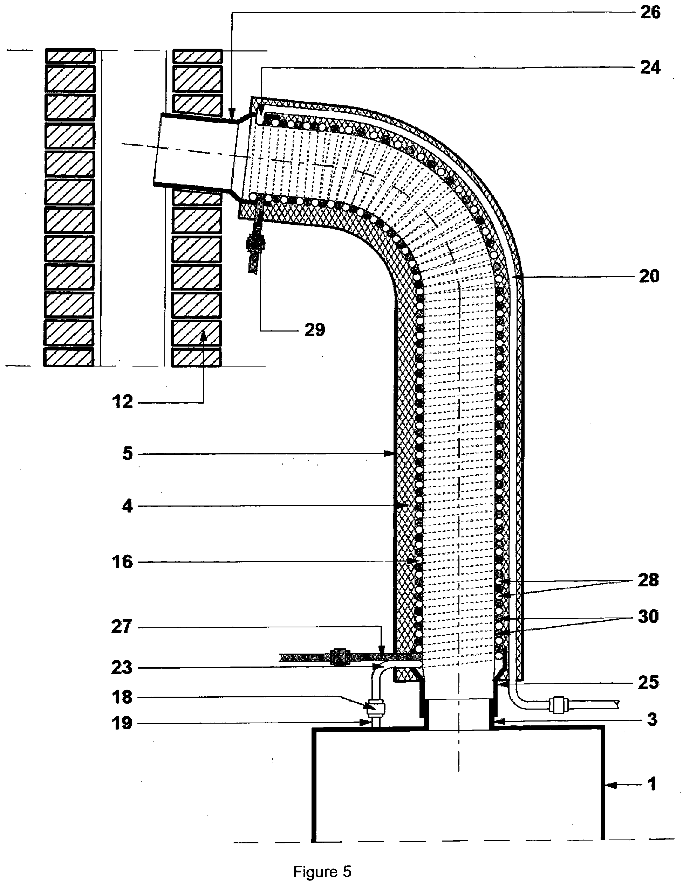

Figure 5 shows an embodiment of the solution according to the invention where the flue pipe 16 is comprised of two spiral tubes.
The inlet opening 23 of the first spiral tube 28 connects to the heating liquid line leaving the boiler 19 of the co-fired boiler 1 by means of a coupling 18. The coils of the second spiral tube 30 fit exactly to the coils of the first spiral tube 28. The second spiral tube 30 has a lower opening 27 and an upper opening 29. The lower part of the flue pipe 16 is connected to the flue pipe stub 3 of the co-fired boiler 1 by means of a boiler connecting piece 25, and its upper part is connected to the chimney 12 by means of a chimney connecting piece 26.
The first spiral tube 28 is connected to the heating liquid line 20 through the outlet opening 24.
The flue pipe 16 is surrounded by an insulating layer 4 and a cover 5.

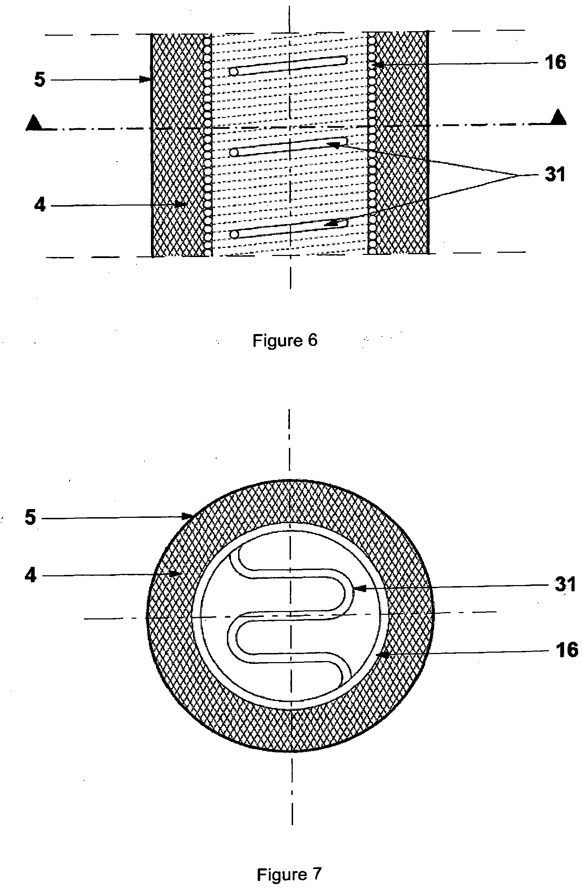

Figures 6 and 7 show an embodiment of the solution according to the invention where there are expansion loops 31 in the inner part of the flue pipe 16 surrounded by an insulating layer 4 and a cover 5.

One end of the flue gas-liquid heat exchanger according to the invention is connected to the co-fired boiler 1, and the other to the chimney 12.
The flue pipe 16 is comprised of a spiral tube forming its wall containing the liquid to be heated, and the wall defines an inner space for discharging flue gas.
The flue pipe 16 has an inlet opening 23 and an outlet opening 24. The inlet opening 23 connects to the heating liquid line leaving the boiler 19, the outlet opening 24 connects the flue pipe 16 to the heating liquid line 20. The flue pipe 16 is surrounded by a heat insulating layer 4 and a cover 5.

A temperature measuring instrument 6 is installed at the upper part of the flue pipe 16 connected to the chimney 12, and a draft control fan 17 at its lower end connected to the co-fired boiler 1. A control unit 2 is fixed on the cover 5 of the flue pipe 16. The temperature measuring instrument 6, the draft control fan 17 and the control unit 2 are electrically connected to each other.

The heating liquid line 20 is connected to a distributing-collecting manifold 9, before the connection point a thermometer 7 and a circulating pump 8 are installed on the heating liquid line 20.
From the distributing-collecting manifold 9 heating liquid carrying lines branch off according to the design of the system to be heated. The return heating liquid line 21 is connected from the distributing-collecting manifold 9 to the co-fired boiler 1.

During the operation of the co-fired boiler 1 the heating liquid is heated, and the generated combustion product, flue gas is emitted through the space of the flue pipe 16 for discharging flue gas into the chimney 12, and from there into the open air. In the course of that the high-temperature combustion product, flue gas transfers a part of its heat to the flue pipe 16. The heating liquid is led from the co-fired boiler 1 into the flue pipe 16 by the heating liquid line leaving the boiler 19 through the inlet opening 23, where it is heated further. The thus further heated heating liquid flows from the flue pipe 16 into the heating liquid line 20 through the outlet opening 24, and from there into the distributing-collecting manifold 9.
The heat retention of the outside of the flue pipe 16 is ensured by an insulating layer 4. The heating liquid is circulated in the flue pipe 16 by a circulating pump 8, the temperature of the heating liquid flowing into the distributing-collecting manifold 9 is shown by a thermometer 7.
In the inner space of the flue pipe 16 for discharging flue gas the discharge velocity of the emitted combustion product and flue gas is controlled by the control unit 2 by means of the draft control fan 17 based on the readings of the temperature measuring instrument 6.
The heating liquid heated to the set desired temperature flows into the distributing-collecting manifold 9, and from there it flows on through various lines, then the cooled down heating liquid returns to the distributing-collecting manifold 9, and from there through the return heating liquid line 21 to the co-fired boiler 1.

According to another preferred embodiment the flue pipe 16 is comprised of two spiral tubes, a first spiral tube 28 and a second spiral tube 30, the coils of which fit together. Then a liquid to be heated independent of the heating liquid of the co-fired boiler 1 is led into the second spiral tube 30 through the lower opening 27. The further heated liquid is led out through the upper opening 29 of the second spiral tube 30.

In the solution comprised of two spiral tubes the heating liquid to be heated leaving the co-fired boiler 1 flows into the first spiral tube 28 through the inlet opening 23, then from there into the heating liquid line 20 through the outlet opening 24.
The liquid to be heated flows into the second spiral tube 30 through the lower opening 27, then passing along the second spiral tube 30, it is led away for use through the upper opening 29. In this case the flow is unidirectional, as the heating liquid and the liquid to be heated flow in the same direction in the two spiral tubes.
In the case of bidirectional flow the liquid to be heated flows into the second spiral tube 30 through the upper opening 29, and the further heated liquid is led out through the lower opening 27.
The liquid to be heated led into the second spiral tube 30 is preferably different from the heating liquid of the co-fired boiler 1, it can be water, antifreeze, or oil.

According to yet another preferred embodiment there are horizontal expansion loops 31 in the inner space of the flue pipe 16 for discharging flue gas, branching off from the coils of the spiral tube. Then the heating liquid to be heated flowing through the expansion loops 31 is heated directly by the combustion product and flue gas flowing in the inner space of the flue pipe 16.
The cross-flow solution according to the invention can be applied to both single spiral tube and double spiral tube flue pipes 16. In the latter case expansion loops 31 can branch off from both the first spiral tube 28 and the second spiral tube 30.

The liquid to be heated, and the heating liquid is preferably water, antifreeze or oil.

The flue pipe 16 is a metal with good thermal conductivity and good heat resistance, preferably copper.
The insulating layer 4 can be glass wool, mineral wool, basalt wool, preferably laminated rock wool. Depending on the quality of the insulating layer 4, the flue pipe 16 can be provided with a cover plate.
The cover 5 is a metal, or metal alloy, preferably aluminium.

With the solution according to the invention the combustion product, flue gas of a temperature of 300-1000 °C, flowing in the inner space of the flue pipe 16 for discharging flue gas, transfers its heat to the liquid flowing in the flue pipe 16, thus the temperature of the combustion product, flue gas is reduced, and the combustion product, flue gas is emitted at a lower temperature into the open air through the chimney 12. The temperature of the liquid flowing into the distributing-collecting manifold 9 is about 25 °C higher than the temperature of the heating liquid flowing out directly from the co-fired boiler 1.
With the solution according to the invention 40-50 % less fuel is required to reach the set design temperature, and the temperature of the emitted combustion product, flue gas is reduced by 60-70%.

The solution according to the invention can also be applied to already existing chimneys and co-fired boilers. It is suitable for any type of fireplace, stove and co-fired boiler, as it can be mounted on previously installed equipment with a reducer.

A further advantage of the solution according to the invention is that it reduces the risk of chimney fires.

### List of reference numbers

- 1): co-fired boiler
- 2): control unit
- 3): flue pipe stub of the boiler
- 4): heat insulating layer
- 5): cover
- 6): temperature measuring instrument
- 7): thermometer
- 8): circulating pump
- 9): distributing-collecting manifold
- 10): ceiling structure
- 11): roof structure
- 12): chimney
- 13): floor structure
- 16): flue pipe
- 17): draft control fan
- 18): coupling
- 19): heating liquid line leaving the boiler
- 20): heating liquid line
- 21): return heating liquid line
- 22): electric wire
- 23): inlet opening
- 24): outlet opening
- 25): boiler connecting piece
- 26): chimney connecting piece
- 27): lower opening
- 28): first spiral tube
- 29): upper opening
- 30): second spiral tube
- 31): expansion loop

## Claims

1. A flue gas-liquid heat exchanger for industrial and residential co-fired boilers, the lower end of which is connected to the flue pipe stub of the boiler (3), and its upper end to the chimney (12) in a releasable manner; which has a temperature measuring instrument (6) connected to a control unit (2), a draft control fan (17), and a heating liquid line (20) equipped with a circulating pump (8), **characterized in that** the flue gas-liquid heat exchanger forms a flue pipe (16) comprised of one or more tightly coiled spiral tubes, and is equipped with an insulating layer (4) provided with a cover (5); the liquid to be heated flows in the flue pipe (16), and the inner space defined by the flue pipe (16) is the part used for discharging the flue gas emitted from the co-fired boiler (1); at least one spiral tube has an inlet opening (23) and an outlet opening (24), which inlet opening (23) connects to the heating liquid line leaving the boiler (19), and the outlet opening (24) connects to the heating liquid line (20).

2. The flue gas-liquid heat exchanger according to claim 1, **characterized in that** the flue pipe (16) is comprised of two spiral tubes: a first spiral tube (28) and a second spiral tube (30).

3. The flue gas-liquid heat exchanger according to claim 2, **characterized in that** the liquid to be heated is led into the second spiral tube (30) through the lower opening (27), and is led out through the upper opening (29) of the second spiral tube (30).

4. The flue gas-liquid heat exchanger according to claim 2, **characterized in that** the liquid to be heated is led into the second spiral tube (30) through the upper opening (29), and is led out through the lower opening (27) of the second spiral tube (30).

5. The flue gas-liquid heat exchanger according to claim 1, **characterized in that** the liquid to be heated is the heating liquid of the co-fired boiler (1).

6. The flue gas-liquid heat exchanger according to claim 5, **characterized in that** the heating liquid of the co-fired boiler (1) is water, oil, or antifreeze.

7. The flue gas-liquid heat exchanger according to claim 1, **characterized in that** the liquid to be heated is water, oil, or antifreeze.

8. The flue gas-liquid heat exchanger according to claims 1 and 2, **characterized in that** there are expansion loops (31) in the inner space of the flue pipe (16).

## Patentansprüche

1. Ein Rauchgas-Flüssigkeits-Wärmetauscher für industrielle und private Mitbefeuerungsheizkessel, das untere Ende davon ist mit dem Rauchrohrstutzen des Kessels (3) verbunden und das obere Ende mit dem Kamin (12) in lösbarer Weise; ausgestattet mit einem Temperatur - Messgerät (6) verbunden mit einer Steuereinheit (2), einem Saugzuggebläse (17) und einer Heizflüssigkeitsleitung (20), versehen mit einer Umwälzpumpe (8), **dadurch gekennzeichnet, dass** der Abgas-Flüssigkeits-Wärmeaustauscher eine Abgasleitung bildet (16), die aus einem oder mehreren eng gewickelten Spiralrohren besteht und mit einer isolierenden Schicht (4) versehen ist, ausgestattet mit einer Abdeckung (5); die zu erhitzende Flüssigkeit strömt in der Abgasleitung (16) und der innere Raum, definiert von der Abgasleitung (16) ist der Teil zum Abführen des aus dem Co-Kessel (1) emittierten Rauchgases; mindestens ein Spiralrohr verfügt über eine Einlassöffnung (23) und eine Austrittsöffnung (24), die Einlassöffnung (23) ist verbunden mit der Heizflüssigkeitsleitung, die den Kessel (19) verlässt, und die Austrittsöffnung (24) ist verbunden mit der Heizflüssigkeitsleitung (20).

2. Der Rauchgas-Flüssigkeits-Wärmetauscher nach Anspruch 1 ist **dadurch gekennzeichnet, dass** das Abgasrohr (16) zwei Spiralrohre umfasst: ein erstes Spiralrohr (28) und ein zweites Spiralrohr (30).

3. Der Rauchgas-Flüssigkeits-Wärmetauscher nach Anspruch 2 ist **dadurch gekennzeichnet, dass** die zu erhitzende Flüssigkeit durch die untere Öffnung (27) in das zweite Spiralrohr geführt wird (30) und durch die obere Öffnung (29) des zweiten Spiralrohrs (30) herausgeführt wird.

4. Der Rauchgas-Flüssigkeits-Wärmetauscher nach Anspruch 2 ist **dadurch gekennzeichnet, dass** die zu erhitzende Flüssigkeit durch die obere Öffnung (29) in das zweite Spiralrohr geführt wird (30) und durch die untere Öffnung (27) des zweiten Spiralrohrs (30) herausgeführt wird.

5. Der Rauchgas-Flüssigkeits-Wärmetauscher nach Anspruch 1 ist **dadurch gekennzeichnet, dass** die zu erhitzende Flüssigkeit die Heizungsflüssigkeit des mitbefeuerten Kessel (1) ist.

6. Der Rauchgas-Flüssigkeits-Wärmetauscher nach Anspruch 5 ist **dadurch gekennzeichnet, dass** die Heizungsflüssigkeit des mitbefeuerten Kessels (1) Wasser, Öl oder Frostschutzmittel ist.

7. Der Rauchgas-Flüssigkeits-Wärmetauscher nach Anspruch 1 ist **dadurch gekennzeichnet, dass** die zu erhitzende Flüssigkeit Wasser, Öl oder Frostschutzmittel ist.

8. Der Rauchgas-Flüssigkeits-Wärmetauscher nach den Ansprüchen 1 und 2 ist **dadurch gekennzeichnet, dass** es im Innenraum des Abgasrohres (16) Dehnungsbögen (31) gibt.

## Revendications

1. Un échangeur de chaleur à gaz liquide pour des chaudières de combustion mixte à l'usage industrielle et résidentielle, dont l'extrémité inférieure est reliée à la tubulaire d'échappement de la chaudière (3), et son extrémité supérieure est relié à la cheminée (12) de manière amovible ; qui comprend un dispositif de mesure de température (6) relié à une unité de commande (2), un ventilateur à tirage aspiré (17) et une conduite de liquide de chauffage (20) équipée d'une pompe de circulation (8), monté de manière que l'échangeur de chaleur à gaz liquide constitue un conduit d'évacuation (16) composé d'un ou de plusieurs tubes en spirale étroitement enroulée, équipé d'une couche isolante (4) et muni d'un couvercle (5) ; le liquide à chauffer circule dans le conduit d'évacuation (16), et l'espace intérieur défini par le conduit d'évacuation (16) sert pour évacuer le gaz émis par la chaudière à combustion mixte (1) ; au moins un tube en spirale a un orifice d'entrée (23) et un orifice de sortie (24), où l'orifice d'entrée (23) est relié à ma conduite de liquide de chauffage sortant de la chaudière (19) et l'orifice de sortie (24) est relié à la conduite de liquide de chauffage (20).

2. Conformément à la demande 1, l'échangeur de chaleur à gaz liquide doit être monté de manière que le conduit d'évacuation (16) soit composé de deux tubes en spirale : un premier tube en spirale (28) et un second tube en spiral (30).

3. Conformément à la demande 2, l'échangeur de chaleur à gaz liquide doit être monté de manière que le liquide à chauffer soit introduit dans le seconde tube en spirale (30) à travers l'orifice inférieur (27) et soit dirigé à travers l'orifice supérieur (29) du second tube en spirale (30).

4. Conformément à la demande 2, l'échangeur de chaleur à gaz liquide doit être monté de manière que le liquide à chauffer soit introduit dans le seconde tube en spirale (30) à travers l'orifice supérieur (29) et soit dirigé à travers l'orifice inférieur (27) du second tube en spirale (30).

5. Conformément à la demande 1, l'échangeur de chaleur à gaz liquide doit être monté de manière que le liquide à chauffer soit le liquide de chauffage de la chaudière à combustion mixte (1).

6. Conformément à la demande 5, l'échangeur de chaleur à gaz liquide doit être monté de manière que le liquide de chauffage de la chaudière à combustion mixte (1) soit de l'eau, de l'huile ou de l'antigel.

7. Conformément à la demande 1, l'échangeur de chaleur à gaz liquide doit être monté de manière que le liquide à chauffer soit de l'eau, de l'huile ou de l'antigel.

8. Conformément aux demandes 1 et 2, l'échangeur de chaleur à gaz liquide doit être monté de manière qu'il y ait des lyres de dilatation (31) dans l'espace intérieur du conduit d'évacuation (16).
